# EUROPEAN PATENT APPLICATION

(11) **EP 1 593 530 A1**
(43) Date of publication of application: **09.11.2005**
(21) Application number: 04710499.7
(22) Date of filing: 12.02.2004
(51) Int. Cl.: B60C 9/20, B60C 9/22

(54) **PNEUMATIC RADIAL TIRE FOR CAR**

(30) Priority: 14.02.2003 JP 2003037084
(71) Applicant: THE YOKOHAMA RUBBER CO., LTD., Tokyo, 105-0004 (JP)
(72) Inventor: HARIKAE, Shinya,c/o The Yokohama Rubber Co., Ltd., shi kanagwa 254-8601 (JP)
(74) Representative: HOFFMANN EITLE
(86) International application number: PCT/JP2004/001460
(87) International publication number: WO 2004/071789

(57) **Abstract**

A pneumatic radial tire for passenger car capable of effectively lowering road noise by specifying the material characteristics and structure of a belt cover layer formed of aromatic polyamide fiber cords, wherein the belt cover layer formed of the aromatic polyamide fiber cords is wound on the outer peripheral side of a belt layer and the aromatic polyamide fiber cords are disposed around the tire at an angle of substantially 0° relative to the circumferential direction of the tire, **characterized in that** the intermediate elongation of the aromatic polyamide fiber cords at a load of 67N is 2.0 to 2.7% and the placing density of the aromatic polyamide fiber cords in the belt cover layer is 36 to 54 pieces/50 mm.

## Description

### TECHNICAL FIELD

The present invention relates to a pneumatic radial tire for passenger car, and more particularly relates to a pneumatic radial tire for passenger car capable of lowering road noise.

### BACKGROUND ART

A pneumatic radial tire includes a belt layer on an outer peripheral side of a carcass layer in a tread portion, the belt layer having a predetermined cord angle relative to a circumferential direction of the tire. In order to prevent a separation failure of an edge portion of the belt layer, which is attributable to centrifugal force in high-speed running, a belt cover layer is generally disposed on an outer peripheral side of the belt layer, the belt cover layer being formed of nylon cords wound around the tire substantially in the circumferential direction of the tire.

Moreover, along with the increase in speed of vehicles, high-speed performance of the tire has been increasingly demanded. Accordingly, a belt cover layer formed of nylon fiber cords cannot get enough strength to counter the centrifugal force acting on the tire. Thus, there has been proposed use of aromatic polyamide fiber cords with high rigidity, instead of the nylon fiber cords, to form the belt cover layer (for example, see Japanese patent application *Kokai* publication No. Hei 2 (1990)-147407).

Incidentally, in a recent pneumatic radial tire for passenger car, not only running performance such as high speed durability but also lowering of road noise generated when the car is running has been demanded. However, although the above-described belt cover layer formed of the aromatic polyamide fiber cords contributes to improvement of the running performance, the effect of lowering the road noise can hardly be expected.

### DISCLOSURE OF THE INVENTION

It is an object of the present invention to provide a pneumatic radial tire for passenger car capable of effectively lowering road noise by specifying material characteristics and a structure of a belt cover layer formed of aromatic polyamide fiber cords.

A pneumatic radial tire for passenger car of the present invention to achieve the foregoing object is a pneumatic radial tire, in which a belt cover layer formed of aromatic polyamide fiber cords is wound on an outer peripheral side of a belt layer and the aromatic polyamide fiber cords are disposed around the tire at an angle of substantially 0° relative to a circumferential direction of the tire, characterized in that intermediate elongation of the aromatic polyamide fiber cords at a load of 67N is 2.0 to 2.7% and a placing density of the aromatic polyamide fiber cords in the belt cover layer is 36 to 54 pieces/50 mm.

The inventor of the present invention has found out that increase in circumferential rigidity in an edge portion of the belt layer is effective in improving the road noise and provision of the belt cover layer with high elasticity is effective in increasing the circumferential rigidity in the edge portion. The finding described above has led the inventor to the present invention.

Specifically, by specifying material characteristics and a structure of the belt cover layer formed of the aromatic polyamide fiber cords as described above, the circumferential rigidity in the edge portion of the belt layer can be increased, and the road noise can be effectively lowered. Moreover, if the belt cover layer is employed, a vulcanization failure attributable to the belt cover layer hardly occurs in manufacturing of the tire.

In the present invention, it is preferable that an amount of contraction of the aromatic polyamide fiber cords, produced when the aromatic polyamide fiber cords are removed from inside of the tire is not more than 2.5% of a length thereof before removal at a position corresponding to a center portion of the belt layer, and is not less than 0.5% of the length before removal at a position corresponding to the edge portion of the belt layer. Thus, the effect of lowering the road noise can be further enhanced.

### BRIEF DESCRIPTION OF THE DRAWINGS

Fig. 1 is a meridian half sectional view showing a pneumatic radial tire for passenger car according to an embodiment of the present invention.
Fig. 2 is an exploded view showing a cut-out tread portion of the pneumatic radial tire for passenger car shown in Fig. 1.

### DESCRIPTION OF THE PREFERRED EMBODIMENT

With reference to the accompanying drawings, a configuration of the present invention will be described in detail below.

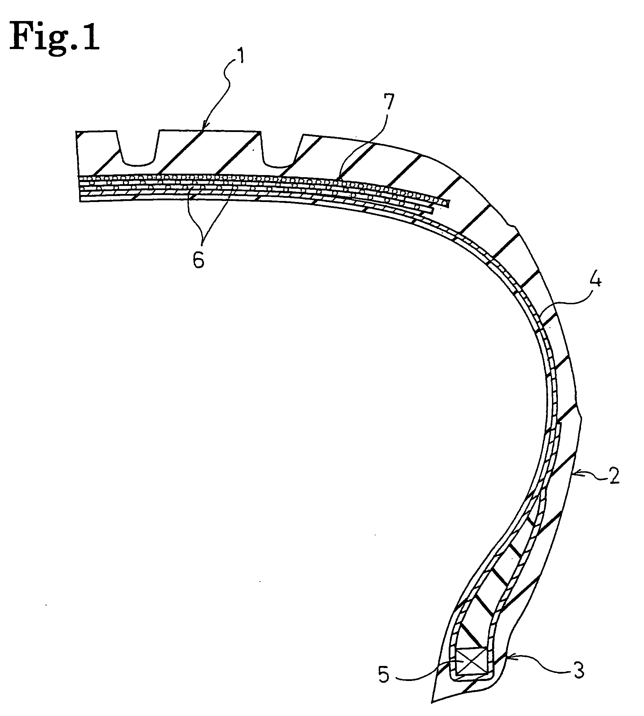

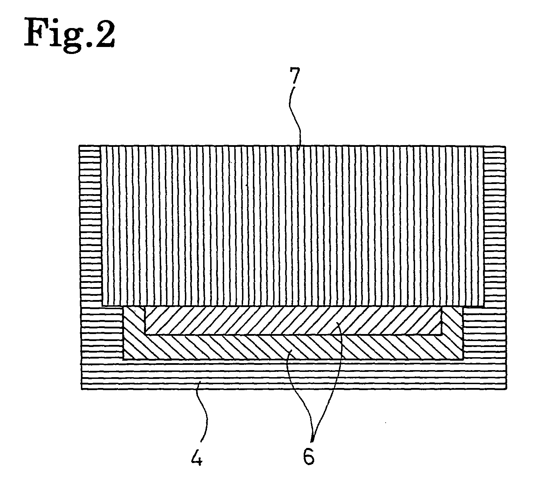

Figs. 1 and 2 show a pneumatic radial tire for passenger car according to an embodiment of the present invention. In Fig. 1, reference numeral 1 is a tread portion, reference numeral 2 is a sidewall portion, and reference numeral 3 is a bead portion. A gap between a pair of bead portions 3 and 3 is bridged by a carcass layer 4. An end in a width direction of the carcass layer 4 is folded from an inner side of the tire toward an outer side thereof around a bead core 5. The carcass layer 4 includes a plurality of cords extending in a radial direction of the tire.

Meanwhile, a plurality of belt layers 6 and 6 are buried in an outer peripheral side of the carcass layer 4 in the tread portion 1. These belt layers 6 and 6 include a plurality of cords tilted at an angle of 10° to 45° relative to a circumferential direction of the tire. The cords are disposed so as to intersect with each other between the layers.

On an outer peripheral side of the belt layers 6 and 6, as shown in Fig. 2, a belt cover layer 7 formed of aromatic polyamide fiber cords is disposed. This belt cover layer 7 is formed by winding the aromatic polyamide fiber cords in a spiral manner around the tire at an angle of substantially 0° relative to the circumferential direction of the tire. Note that it is preferable that a cord angle of the belt cover layer 7 relative to the circumferential direction of the tire is not more than 5° .

Intermediate elongation of the aromatic polyamide fiber cords forming the belt cover layer 7 at a load of 67N has a physical property value of 2.0 to 2.7%, and a placing density of the aromatic polyamide fiber cords in the belt cover layer 7 is set to 36 to 54 pieces/50 mm in a center portion of the belt layer 6. This placing density is measured in a direction perpendicular to the cords. Thus, the belt cover layer 7 plays a role of suppressing separation of edge portions of the belt layers 6 and 6 in high-speed running as well as suppressing generation of road noise.

Here, if the intermediate elongation of the aromatic polyamide fiber cords is less than 2.0%, deformation of the belt cover layer 7 in a mold is limited in vulcanization of the tire, which leads to a vulcanization failure. On the other hand, if the intermediate elongation exceeds 2.7%, an effect of lowering the road noise cannot be obtained. Moreover, if the placing density of the aromatic polyamide fiber cords in the belt cover layer 7 is less than 36 pieces/50 mm, the effect of lowering the road noise cannot be obtained. On the other hand, if the placing density exceeds 54 pieces/50 mm, the deformation of the belt cover layer 7 in the mold is limited in the vulcanization of the tire, which leads to the vulcanization failure.

In the pneumatic radial tire described above, in order to further enhance the effect of lowering the road noise, a cord tension of the belt cover layer 7 is made appropriate in the following manner. Specifically, an amount of contraction of the aromatic polyamide fiber cords forming the belt cover layer 7, the contraction occurring when the aromatic polyamide fiber cords are removed from inside of the tire, is set to not more than 2.5%, preferably, 1.5 to 2.5% of a length thereof before removal at a position corresponding to the center portion of the belt layer 6 (at a center position in a width direction of the belt), and is set to not less than 0.5%, preferably, 0.5 to 1.5% of the length before removal at a position corresponding to the edge portion of the belt layer 6 (at both end positions in the width direction of the belt). In other words, the cord tension of the belt cover layer 7 in the edge portion of the belt layer 6 is set to be larger than that in a conventional case without excessively increasing the cord tension of the belt cover layer 7 in the center portion of the belt layer 6. Thus, circumferential rigidity in the edge portion of the belt layer 6 is increased. Consequently, the increased circumferential rigidity contributes to lowering of the road noise.

The amount of contraction of the aromatic polyamide fiber cords can be measured as described below. Specifically, the belt cover layer 7 is exposed by removing tread rubber from the tread portion 1, and the aromatic polyamide fiber cords are taken off from a range of a predetermined length of the belt cover layer 7. Thereafter, a length of the cords after removal thereof is measured. Thus, the amount of contraction relative to the length thereof before removal may be obtained. For example, an average value of amounts of contraction may be obtained for five of the aromatic polyamide fiber cords positioned in the center portion of the outermost belt layer 6. In addition, an average value of amounts of contraction may be obtained for five of the aromatic polyamide fiber cords positioned in the edge portion of the outermost belt layer 6.

As a method for making the cord tension of the belt cover layer 7 appropriate according to positions in the width direction of the tire, a curvature is imparted to an outer peripheral surface of a tread/belt forming drum along a width direction of the drum, and the outer peripheral surface can be expanded in a center portion in the width direction of the drum. In this case, a peripheral length of the belt cover layer 7 at the position corresponding to the edge portion of the belt layer 6 is shortened on the drum. Thus, the cord tension of the belt cover layer 7 at the position corresponding to the edge portion of the belt layer 6 can be increased in the vulcanized tire.

Moreover, as another method for making the cord tension of the belt cover layer 7 appropriate according to the positions in the width direction of the tire, the cord tension of the belt cover layer 7 may be controlled according to the positions in the width direction of the tire on the tread/belt forming drum. Specifically, in forming the belt cover layer 7 by use of a strip material including at least one piece of the aromatic polyamide fiber cord, a tension caused when the strip material is wound around the drum is controlled according to the positions in the width direction of the tire.

Although the embodiment of the present invention has been described in detail above, it should be understood that various changes, alternatives, and substitutions can be made without departing from the spirit and scope of the present invention, which are defined by the attached claims.

### [Examples]

One type of conventional tire (Conventional Example 1), three types of comparative tires (Comparative Examples 1 to 3) and five types of tires of the present invention (Examples 1 to 5) are manufactured, respectively, which are pneumatic tires, each having a size of 195/65R15 and a belt cover layer provided on an outer peripheral side of a belt layer. Between the tires, differences are made in a material, fineness, the number of twist, a physical property (intermediate elongation at a load of 67N), and a placing density of fiber cords forming the belt cover layer as shown in Table 1. In addition, the tires have common specifications other than the belt cover layer.

As to the tires described above, road noise is evaluated by use of the following evaluation method, and presence of a vulcanization failure is checked. The results are shown in Table 1.

### Method for evaluating road noise:

The respective tires are attached to a wheel having a rim size of 15 × 6JJ at an air pressure of 200 kPa, and are mounted on a FR car of 2.5 liter displacement. Feeling evaluation is conducted by five trained drivers who drive the car on a road for measuring road noise. The respective drivers graded the tires on a scale of 1 to 5 based on the following criteria, in relative comparison with a reference tire (the conventional tire). The results of evaluation are indicated by an average mark among three drivers, from which the highest mark and the lowest mark are excluded.

### Criteria

5: Excellent, 4: Good, 3.5: Somewhat good, 3: Same as standard, 2.5: Somewhat poor (practical lower limit), 2: Poor, 1: Very poor

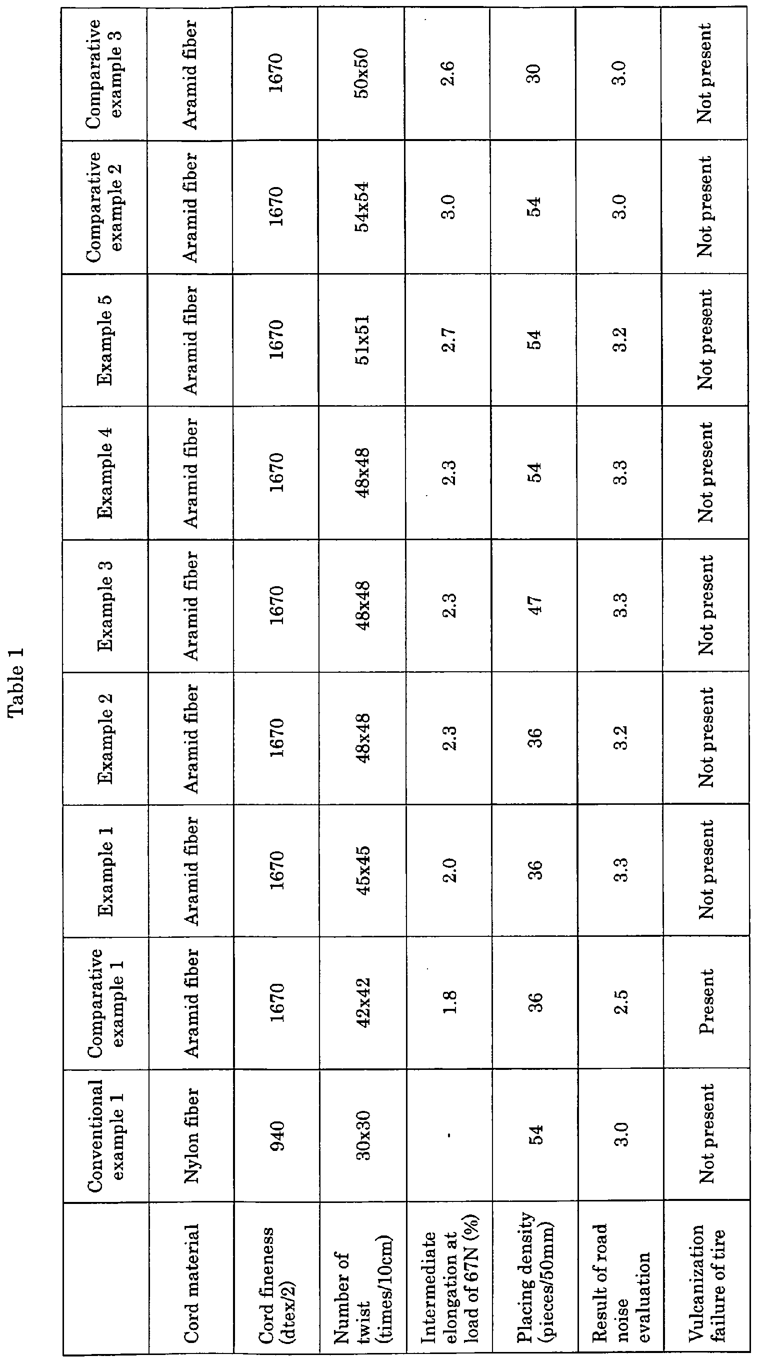

As is clear from Table 1, the tires of Examples 1 to 5 have less road noise, and no vulcanization failure occurs therein.

In the above-described tires of Examples 1 to 5, an amount of contraction of aromatic polyamide fiber cords forming the belt cover layer, the contraction occurring when the aromatic polyamide fiber cords are removed from inside of the tire, is set to 2.5% of a length thereof before removal at a position corresponding to a center portion of the belt layer, and is set to 0.5% of the length before removal at a position corresponding to an edge portion of the belt layer.

Here, three types of tires of the present invention (Examples 6 to 8) are manufactured from the tire of Example 3, which are different from each other only in the amount of contraction of the aromatic polyamide fiber cords forming the belt cover layer as shown in Table 2.

As to the tires described above, road noise is evaluated by use of the same evaluation method as that described above, and presence of a vulcanization failure is checked. The results are shown in Table 2.

**Table 2**

| | | Example 3 | Example 6 | Example 7 | Example 8 |
|---|---|---|---|---|---|
| Cord materia | | Aramid fiber | Aramid fiber | Aramid fiber | Aramid fiber |
| Cord fineness (dtex/2) | | 1670 | 1670 | 1670 | 1670 |
| Number of twist (times/10cm) | | 48x48 | 48x48 | 48x48 | 48x48 |
| Intermediate elongation at load of 67N (%) | | 2.3 | 2.3 | 2.3 | 2.3 |
| Amount of cord contraction (%) | Position in center portion of belt layer | 2.5 | 2.0 | 2.5 | 3.0 |
| | Position in edge portion of belt layer | 0.5 | 0 | 1.0 | 1.0 |
| Placing density (pieces/50mm) | | 47 | 47 | 47 | 47 |
| Result of road noise evaluation | | 3.3 | 3.2 | 3.5 | 3.2 |
| Vulcanization failure of tire | | Not present | Not present | Not present | Not present |

As is clear from Table 2, in the case where the amount of contraction of the aromatic polyamide fiber cords forming the belt cover layer is not more than 2.5% of the length thereof before removal at the position corresponding to the center portion of the belt layer, and is not less than 0.5% of the length before removal at the position corresponding to the edge portion of the belt layer, a notable effect of lowering the road noise is achieved.

### INDUSTRIAL APPLICABILITY

The present invention can be effectively utilized in a tire manufacturing industry and thus in an automobile manufacturing industry.

## Claims

1. A pneumatic radial tire for passenger car, in which a belt cover layer formed of aromatic polyamide fiber cords is disposed on an outer peripheral side of a belt layer and the aromatic polyamide fiber cords are wound around the tire at an angle of substantially 0° relative to a circumferential direction of the tire, **characterized in that** intermediate elongation of the aromatic polyamide fiber cords at a load of 67N is 2.0 to 2.7% and a placing density of the aromatic polyamide fiber cords in the belt cover layer is 36 to 54 pieces/50 mm.

2. The pneumatic radial tire for passenger car according to claim 1, wherein an amount of contraction of the aromatic polyamide fiber cords, produced when the aromatic polyamide fiber cords are removed from inside of the tire is not more than 2.5% of a length thereof before removal at a position corresponding to a center portion of the belt layer, and is not less than 0.5% of the length before removal at a position corresponding to an edge portion of the belt layer.
